# EUROPEAN PATENT APPLICATION

(11) **EP 4 087 084 A1**
(43) Date of publication of application: **09.11.2022**
(21) Application number: 21172906.6
(22) Date of filing: 07.05.2021
(51) Int. Cl.: H02J 7/00

(54) **ENERGY STORAGE SYSTEM**

(71) Applicant: ABB Schweiz AG, 5400 Baden (CH)
(72) Inventor: PREDA, Nicolae, 30-087 Krakow (PL); Hotlos, Krzysztof, 33-340 Stary Sacz (PL); Dusak, Piotr, 32-050 Skawina (PL); Gruca, Jacek, 31-279 Krakow (PL); Halat, Piotr, 30-408 Krakow (PL); Antoniewicz, Patrycjusz, 30-611 Krakow (PL)
(74) Representative: AOMB Polska Sp. z.o.o.

(57) **Abstract**

The present invention relates to an energy storage system comprising at least one supercapacitor.

An energy storage system comprising a Master Control Unit (MCU), configured to provide measurements acquisition, control, monitoring, protection, diagnostics, and communication, an at least one bank comprising an at least one supercapacitor (C) and a Capacitor monitoring System (CMS), configured to provide for each of the at least one supercapacitor (C) monitoring, protection and to provide supercapacitor-related data (SCRD), an at least one Acquisition Unit (AQU), configured to acquire data, related to the single bank, from the Capacitor Monitoring System (CMS) and to communicate with the Master Control Unit (MCU), wherein there is one Acquisition Unit (AQU) for each bank, wherein the Master Control Unit (MCU) is configured to communicate with an external controller (EC) by means of a communication bus, and the Master Control Unit (MCU) and the Acquisition Unit (AQU) are configured to communicate with each other.

## Description

### Technical field

The present invention relates to an electric energy storage system comprising at least one supercapacitor.

### Background art

WO 2017060444A1 discloses an arrangement comprising a direct current, DC, traction power network adapted for supplying electrical energy to a rail system, a transformer, and an energy recuperation device adapted for returning surplus electrical energy of the DC traction power network into an AC traction network and/or an energy storage system adapted for storing surplus electrical energy of the DC traction power network and for feeding back the stored electrical energy into the DC traction power network, whereby the transformer is electrically connected in series between the DC traction power network and the energy recuperation device and/or the energy storage system, and/or, comprising the energy recuperation device electrically connected in series between the DC traction power network and the transformer.

WO 2013020212A1 discloses an energy storage system for connection to a traction power supply that provides power to an electric vehicle. The energy storage system includes a power controller that controls a DC-DC converter to transfer electrical energy from the traction power supply to electrical energy storage when the train is braking. The power controller also controls the converter to transfer electrical energy from the electrical energy storage to the traction power supply when the train is accelerating. The controller slows the rate of energy transfer when upper and lower voltage boundary limits of the electrical energy storage are approached, respectively.

### Summary

The purpose of the invention is to provide a modular system which provides a data acquisition solution for banks comprising multiple supercapacitors while improving safety and functionality of such system.

According to the present invention there is provided an energy storage system comprising:
a Master Control Unit, configured to provide measurements acquisition, control, monitoring, protection, diagnostics, and communication,
an at least one bank comprising an at least one supercapacitor and a Capacitor Monitoring System, configured to provide for each of the at least one supercapacitor monitoring, protection and to provide supercapacitor-related data,
an at least one Acquisition Unit, configured to acquire data, related to the single bank, from the Capacitor Monitoring System and to communicate with the Master Control Unit, wherein there is one Acquisition Unit for each bank,
wherein the Master Control Unit is configured to communicate with an external controller by means of a communication bus, and the Master Control Unit and each of the Acquisition Units are configured to communicate with each other.

In one embodiment the system further comprises a fixed mechanical part, and a mobile withdrawable mechanical part, which may be enclosed within a fixed mechanical part. The mobile withdrawable mechanical part holds the Master Control Unit, at least one bank, at least one Acquisition Unit.

In another embodiment the system further comprises an at least one switchgear apparatus connecting the at least one bank to a power distribution bus or connecting the at least one bank to a formatting/equalization bus, wherein the at least one switchgear is controlled by the Master Control Unit.

In preferred embodiment the system further comprises an at least one connection interface, preferably with a switchgear, to connect the at least one bank to an internal or external Discharge Device of a Capacitor.

In one embodiment the Master Control Unit and the at least one Acquisition Unit are communicating with each other by means of a serial connection, preferably over an at least one optical fiber.

Optionally the Master Control Unit and all of the Acquisition Units are arranged in a ring topology.

In other embodiment the communication bus is a CAN bus.

Optionally the Acquisition Unit is powered by a power supply signal which is generated by the Master Control Unit, preferably the power supply signal is an AC waveform, even more preferably the power supply signal is a square-wave.

Alternatively, the Acquisition Unit is configured to receive supercapacitor-related data related to a temperature of the supercapacitor or a bank voltage, preferably by means of an Acquisition Unit analog input.

In yet another embodiment the Acquisition Unit comprises an at least one digital input configured to receive an overvoltage signal and at least one digital output to transmit an overvoltage signal, preferably the overvoltage signal is transmitted through the at least one optical fiber, even more preferably there is a dedicated optical fiber through which only the overvoltage signal is transmitted.

In preferred embodiment the Master Control Unit is configured to receive energy storage system related data related to at least one of fuses status, fan feedback, withdrawable part position indicator, Emergency Switch Off, preferably as a digital input signal.

In one embodiment the Master Control Unit is configured to control at least one of a fan, safety lock, light indicator or switchgear, preferably by means of at least one digital output.

Optionally the Master Control Unit is configured to receive energy storage system related data related to at least one of a current measurement, ambient temperature or voltage measurement, preferably as an analog input.

### Brief description of drawings

The present invention will be now described with reference to the drawings, in which:
Fig. 1 presents a block diagram of the energy storage system according to the invention.
Fig. 2 presents a block diagram on which the Master Control Unit and connection between other parts of the system are shown.
Fig. 3 presents a block diagram on which the Capacitor Monitoring System and connection between other parts of the system are shown.

### Detailed description

The energy storage system incorporates power elements (supercapacitors, busbars, switchgear), control hardware and software (MCU,AQU,CMS) and auxiliary devices (fans, lamps, position indicators etc.), that are providing energy storage functionality (main function) together with monitoring, protection and control functionality. This creates an integrated solution which allows the device to operate as a semi-autonomous device, an atomic unit (module) that can be used in a multi-modular fashion (in order to extend the power/energy capability of a system).

Semi-autonomy is achieved by allowing the MCU to directly and indirectly (through AQU) monitor the elements of the system (capacitors, switchgear, fans, lamps etc.) and directly control all the actuators in the system in order to achieve a desired operating state and protection/safety.

The semi-autonomy means that the unit can be externally controlled (via MCU) by an external controller to be driven in the desired state (connected/disconnected to power bus, or to equalizing bus) while the MCU ensures the correct internal sequences are performed and protection of the whole device is achieved.

Its internal structure allows flexibility by separating the main control, protection and monitoring from the monitoring functionality of the multiple banks and modules.

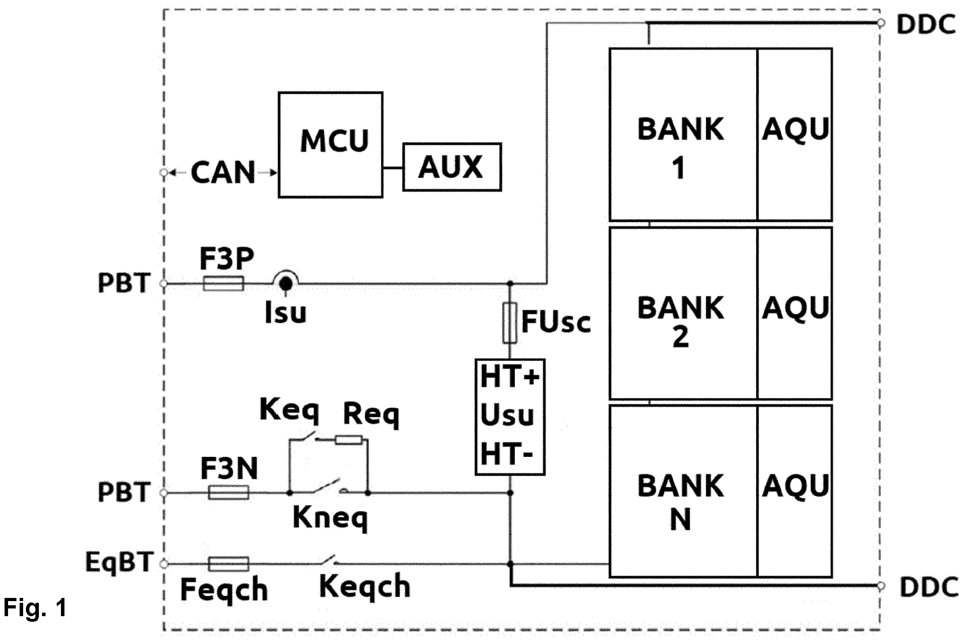

In fig. 1 the energy storage system is presented. The energy storage system comprising at least a Master Control Unit, MCU, an at least one bank comprising an at least one supercapacitor, C, and a Capacitor Monitoring System, CMS, and an at least one Acquisition Unit, AQU.

The MCU is configured to provide measurements acquisition, control, monitoring, protection, diagnostics, and communication. In some embodiments the MCU may be connected to at least one auxiliary device, AUX, such as a fan, a thermometer, etc. MCU is configured to communicate with an external controller, EC, by means of an external communication bus, preferably a CAN bus, CAN, and to communicate with at least one AQU, by means of an internal communication bus, preferably a serial bus.

The AQU is configured to acquire data, related to capacitors in the single bank, from the CMS and to communicate with the MCU. Each bank has its own AQU.

The CMS is configured to provide for each of the at least one supercapacitor C monitoring, protection and to provide supercapacitor-related data SCRD.

In fig. 1 it is shown that banks are connected in series. The person skilled in the art should know that a parallel connection, or any other suitable for an application topology, is also possible.

Such configuration provides a system which is made of structural blocks. Every block may be chosen separately and may be extended when necessity arises.

The energy storage system may further comprise in another embodiment a fixed mechanical part, and a mobile withdrawable mechanical part. The mobile withdrawable mechanical part holds the MCU, at least one bank and at least one AQU. In this embodiment the MCU, at least one bank and at least one AQU are enclosed within the withdrawable mechanical part, which may be inserted into the fixed mechanical part while being used. During a maintenance the withdrawable mechanical part is moved such that the energy storage system is exposed and easy to access. It also should be noted that energy storage system is separated from the power bus terminal, PBT and, in some embodiments, from equalization busses. This embodiment is not shown in fig. 1.

According to another embodiment the energy storage system comprises an at least one switchgear apparatus. The switchgear apparatus may connect the at least one bank to a power distribution bus or connect the at least one bank to a formatting/equalization bus being a low power bus. This switchgear may be controlled manually, by the MCU or other external device. The energy storage system may further comprise an at least one connection interface, preferably with a switchgear, to connect the at least one bank to external Discharge Device of a Capacitor DDC. It is also possible to include the DDC as an additional internal structure of the energy storage system. Fig. 1 further discloses power bus terminals, PBT, connected to the main circuit fuses, F3P and F3N, for positive and negative pole accordingly. Next, after the main fuse F3P, a current measurement, Isu, is taken. After the main fuse F3N there are two parallel switchgears Keq and Kneq, wherein in series with Keq there is also a resistance Req. Those switchgears are being switch when voltage on both sides are the same (Kneq) or are different (Keq). Next, between both power buses, there is connected a fuse FUsc and a voltage transducer Usu with a positive terminal HT+ and a negative terminal HT-. The fuse FUsc and the voltage transducer Usu are connected in series to each other. Next each power bus is connected to different DDC terminal and to positive and negative of the banks. Negative terminal of the banks is also connected to an equalizing bus terminal EqBT with a switchgear Keqch and a fuse Feqch. It should be mentioned that the person skilled in the art should be able to propose another way of connecting abovementioned elements and achieve similar functionality.

Abovementioned switchgear, in this embodiment, is connected to and controlled by the MCU. If MCU has direct control of the switchgear it means that it can safely perform a connection sequence (checks measurements, connects precharge first, main breaker second) or disconnection sequence, as well as performing a disconnection sequence to protect the device against overloading, short-circuit or overvoltage (checks measurements) or against internal faults (checks measurement, feedbacks) (this list is not exhaustive). If MCU would not have direct control of the switchgear, in other embodiment, then the external controller would perform these functions and in case of protection that controller either doesn't have all the information (internal to the SU) to perform on the same level or it has the information but the response will be delayed due to data communication delays.

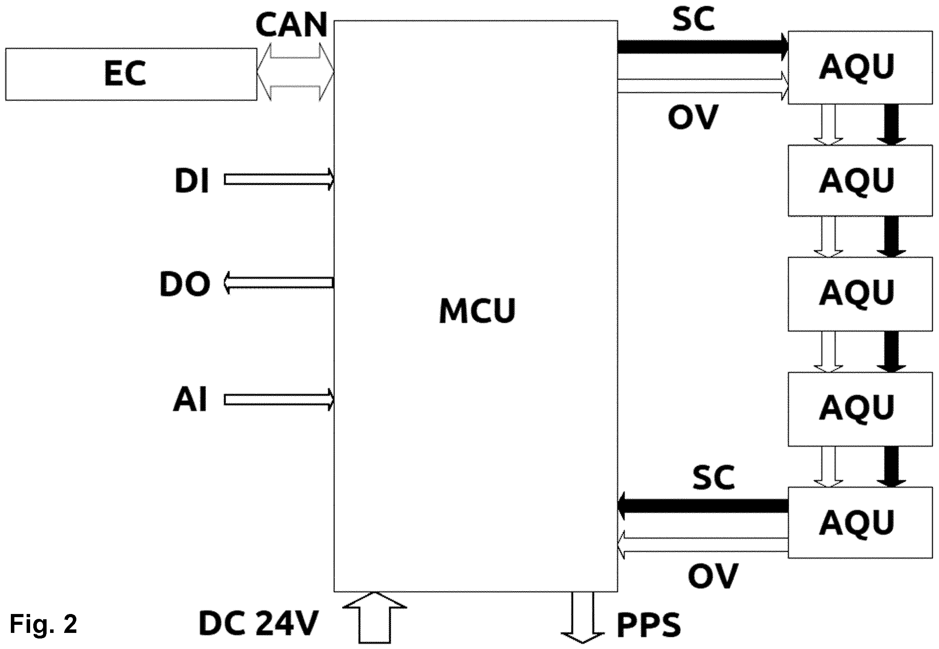

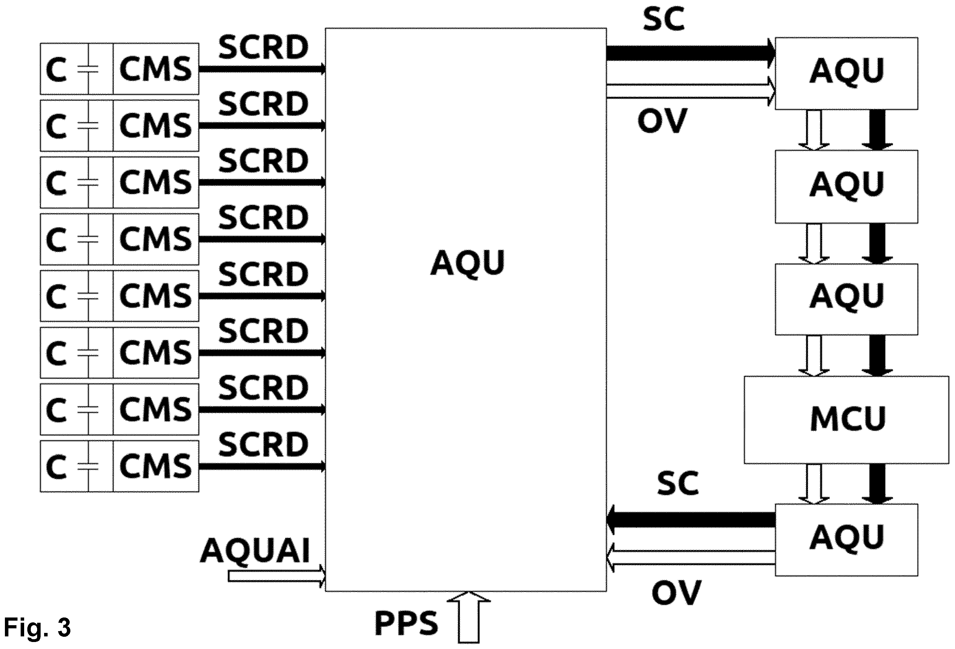

Further embodiments will be described with reference to figs. 2 and 3. The MCU is provided with a power, in this case by means of 24 V DC. The MCU and the at least one AQU are communicating with each other by means of a serial connection, SC. Serial connection SC provides additional data to the MCU. Preferably such serial connection SC over an at least one optical fiber which provides security features to the energy storage system, especially the MCU, during malfunction of the bank or the AQU.

In other embodiment the MCU and all of the AQU are arranged in a ring topology. Such topology require a limited number of inputs and outputs in both the MCU and the AQU. It should be noted that person skilled in the art will know other topologies which may be used to connect the MCU and all of the AQU.

The MCU may be configured to receive energy storage system related data related to at least one of fuses status, fan feedback, withdrawable part position indicator, Emergency Switch Off, preferably as a digital input DI signal. The MCU may also be configured to control, preferably by means of at least one digital output DO, at least one of a fan, safety lock or light indicator. Also the MCU may be configured to receive energy storage system related data related to at least one of a current measurement, ambient temperature or voltage measurement, preferably as an analog input Al. All this data relates to the general condition of the energy storage system (temperature, cooling, applied voltage and current etc.) rather than individual supercapacitor C parameter - those data are acquired by the AQU and are transferred separately. However, the person skilled in the art will know other data which the MCU may need to improve performance of the energy storage system.

In another embodiment the AQU is powered by a power supply signal, PPS, which is generated by the MCU, preferably the power supply signal is an AC waveform, even more preferably the power supply signal is a square-wave. It should be noted that the AQU may also be directly supply from the bank.

In yet another embodiment the AQU is configured to receive SCRD, such as a temperature of the supercapacitor or a bank voltage, preferably by means of an Acquisition Unit analog input AQUAI.

In another embodiment the AQU comprises an at least one digital input DI configured to receive an overvoltage signal, OV, and at least one digital output DO to transmit an overvoltage signal, OV, preferably the overvoltage signal OV is transmitted through the at least one optical fiber, even more preferably there is a dedicated optical fiber through which only the overvoltage signal is transmitted. This embodiment in which overvoltage signal OV is transmitted separately decreases time needed to inform the MCU about overvoltage resulting in stopping charging of the bank and disconnecting from the power bus. OV is transmitted from at least one AQU to MCU, wherein preferably all AQU and MCU are connected such that they form a ring. Communicating this via optical fiber, or even separate, dedicated optical fiber, further improves safety of the energy storing system.

## Claims

1. An energy storage system comprising:
a Master Control Unit (MCU), configured to provide measurements acquisition, control, monitoring, protection, diagnostics, and communication,
an at least one bank comprising an at least one supercapacitor (C) and a Capacitor Monitoring System (CMS), configured to provide for each of the at least one supercapacitor (C) monitoring, protection and to provide supercapacitor-related data (SCRD),
an at least one Acquisition Unit (AQU), configured to acquire data, related to the single bank, from the Capacitor Monitoring System (CMS) and to communicate with the Master Control Unit (MCU), wherein there is one Acquisition Unit (AQU) for each bank,
wherein the Master Control Unit (MCU) is configured to communicate with an external controller (EC) by means of a communication bus, and the Master Control Unit (MCU) and each of the Acquisition Unit (AQU) are configured to communicate with each other.

2. The energy storage system according to claim 1, **characterized in that** it further comprises:
a fixed mechanical part, and
a mobile withdrawable mechanical part, which may be enclosed within a fixed mechanical part, wherein the mobile withdrawable mechanical part holds the Master Control Unit (MCU), at least one bank, at least one Acquisition Unit (AQU).

3. The energy storage system according to anyone of previous claims, **characterized in that** it further comprises an at least one switchgear apparatus connecting the at least one bank to a power distribution bus and/or connecting the at least one bank to a formatting/equalization bus, wherein the at least one switchgear is controlled by the Master Control Unit.(MCU).

4. The energy storage system according to anyone of previous claims, **characterized in that** it further comprises an at least one connection interface, preferably with a switchgear, to connect the at least one bank to an internal or external Discharge Device of a Capacitor (DDC).

5. The energy storage system according to anyone of previous claims, **characterized in that** the Master Control Unit (MCU) and the at least one Acquisition Unit (AQU) are communicating with each other by means of a serial connection (SC), preferably over an at least one optical fiber.

6. The energy storage system according to anyone of the previous claims, **characterized in that** the Master Control Unit (MCU) and all of the Acquisition Units (AQU) are arranged in a ring topology.

7. The energy storage system according to anyone of previous claims, **characterized in that** the communication bus is a CAN bus (CAN).

8. The energy storage system according to anyone of previous claims, **characterized in that** the Acquisition Unit (AQU) is powered by a power supply signal (PPS) which is generated by the Master Control Unit (MCU), preferably the power supply signal is an AC waveform, even more preferably the power supply signal is a square-wave.

9. The energy storage system according to anyone of previous claims, **characterized in that** the Acquisition Unit (AQU) is configured to receive supercapacitor-related data related to a temperature of the supercapacitor (C) or a bank voltage, preferably by means of an Acquisition Unit analog input (AQUAI).

10. The energy storage system according to anyone of previous claims, **characterized in that** the Acquisition Unit (AQU) comprises an at least one digital input configured to receive an overvoltage signal (OV) and at least one digital output to transmit an overvoltage signal (OV), preferably the overvoltage signal (OV) is transmitted through the at least one optical fiber, even more preferably there is a dedicated optical fiber through which only the overvoltage signal is transmitted.

11. The energy storage system according to anyone of previous claims, **characterized in that** the Master Control Unit (MCU) is configured to receive energy storage system related data related to at least one of fuses status, fan feedback, withdrawable part position indicator, Emergency Switch Off, preferably as a digital input (DI) signal.

12. The energy storage system according to anyone of previous claims, **characterized in that** the Master Control Unit (MCU) is configured to control at least one of a fan, safety lock, light indicator or switchgear, preferably by means of at least one digital output (DO).

13. The energy storage system according to anyone of previous claims, **characterized in that** the Master Control Unit (MCU) is configured to receive energy storage system related data related to at least one of a current measurement, ambient temperature or voltage measurement, preferably as an analog input (Al).
